# EUROPEAN PATENT APPLICATION

(11) **EP 4 279 222 A1**
(43) Date of publication of application: **22.11.2023**
(21) Application number: 23173637.2
(22) Date of filing: 16.05.2023
(51) Int. Cl.: B25J 9/00

(54) **ROBOT MOUNTING BASE**

(30) Priority: 18.05.2022 US 202263343150 P; 03.05.2023 US 202318311315
(71) Applicant: Delaware Capital Formation, Inc., Wilmington, Delaware 19809 (US)
(72) Inventor: GEARY, James W., Pawcatuck, 06379 (US); KNOBLOCH, Brian A., Chesterfield, 48047 (US)
(74) Representative: Staeger & Sperling Partnerschaftsgesellschaft mbB

(57) **Abstract**

A quick change robot system (10) has a base plate (18) to permanently mount to a work station. An alignment mechanism (22) is on the base plate. An adapter plate (16) is affixed to a robot base. The adapter plate (16) includes a plurality of alignment mechanisms. A clamping device (20) secures the base plate (18) with the adapter plate (16). The clamping device (20) is positioned about the base plate (18) and adapter plate (16) to clamp and preload the base plate (18) and adapter plate (16) with one another.

## Description

### CROSS-REFERENCE TO RELATED APPLICATION

This application claims the benefit of U.S. Provisional Application No. 63/343,150, filed on May 18, 2022. The entire disclosure of the above application is incorporated herein by reference.

### FIELD

The present disclosure relates to robots and, more particularly, to quick change robot bases.

### BACKGROUND

Currently, robot bases exist in the field. However, these bases, while precise and repeatable, require threaded fasteners and wrenches to mount the robot to the machine base or work table. This process is slow and fasteners and tools can be misplaced or lost in the work area. Additionally, magnetic bases are used. While the base is ridged, it has no location features and thus mounting is usually not repeatable. Also, designs exist that are repeatable and no tools are required, however, the system lacks rigidity or stiffness in the design. The stiffness or rigidity ensures that the robot base will not deflect and lose the robot's potential repeatability.

The present disclosure provides the art with a quick change robot base that enables smaller robots to be removed from one work area or station and brought to another. Thus, the same robot can be continued to be utilized in a process. The present disclosure provides repeatable positioning of the robot. This is paramount as it must perform an operation at a specific workstation through many change outs of the robot. The disclosure provides a manual device that enables users of small lightweight robots to relocate the robot to multiple workstations simply, quickly, rigidly and repeatedly.

### SUMMARY

According to the disclosure, a quick change robotic system comprises a base plate permanently mounted to a workstation or table. An alignment mechanism is on the base plate. A robot includes an adapter plate. The adapter plate affixes to the robot base plate. The adapter plate includes a plurality of alignment mechanisms. A clamping device secures the base plate and the adapter plate together. The clamping device is positioned about the base plate and adapter plate to clamp and preload the base plate with the adapter plate. A plurality of base plates are positioned at different workstations. The clamping device includes a toggle clamp to tighten the clamping device. The base plate and adapter plate both include a beveled edge rim. The base plate alignment mechanism includes a plurality of pins. The adapter plate plurality of alignment mechanisms each include a plurality of sockets. The adapter plate further includes a plurality of mounting patterns to receive a plurality of different robots.

According to a second aspect of the disclosure, a robotic system comprises a base plate permanently mounted to a workstation. An alignment mechanism is on the base plate. A robot includes an adapter plate. The adapter plate affixes to the robot base plate. The adapter plate includes a plurality of mounting patterns to receive a plurality of different robots. A clamping device secures the base plate and adapter plate with one another. The clamping device is positioned about the base plate and adapter plate for clamping and preloading the base plate and adapter plate together. A plurality of adapter plates are positioned at various workstations. The clamping device includes a toggle clamp to tighten the clamping device. The base plate and adapter plate each include a beveled edge rim. The base plate alignment mechanism includes a plurality of pins. The adapter plate may further include a plurality of alignment mechanisms. The alignment mechanisms each include a plurality of sockets.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

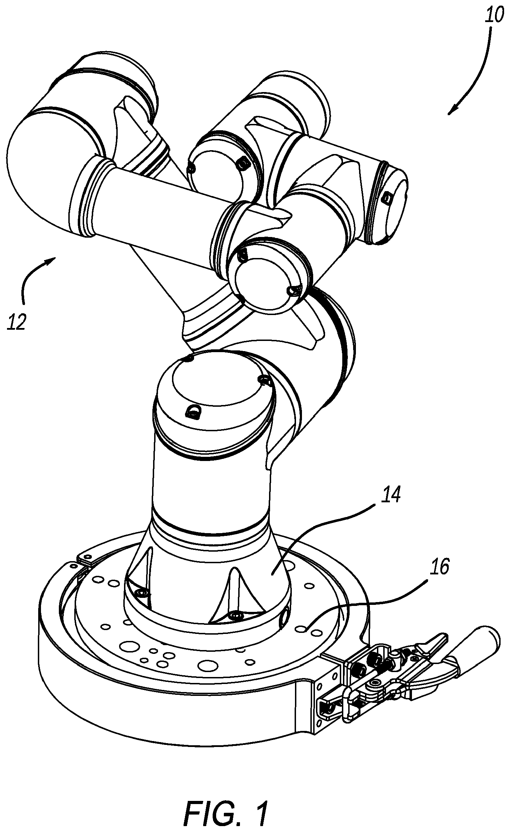

Fig. 1 is a perspective view of a robot system.
Fig. 2 is a view like Fig. 1 with the robot removed from the base.
Fig. 3 is an exploded view of the adapter base plate and adapter plate assembly.
Fig. 4 is a perspective view of a bottom of the adapter plate.
Fig. 5 is a cross-section view of Fig. 1 along line 5-5 thereof.
Fig. 6 is an enlarged perspective view of the robot adapter plate.
Fig. 7 is an enlarged perspective view of the robot base plate.

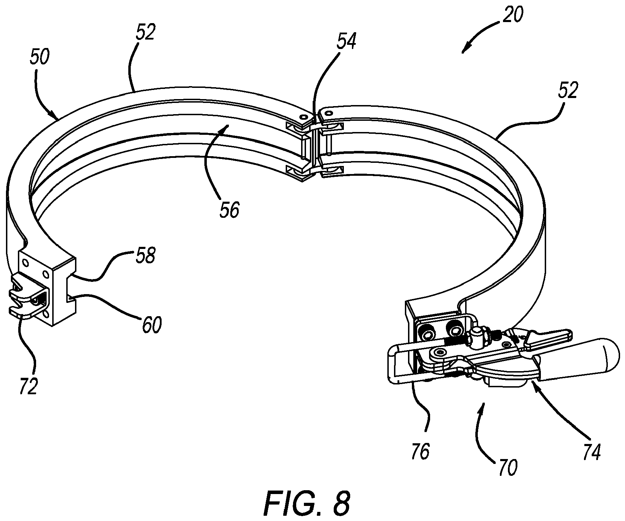

Fig. 8 is an enlarged perspective view of the clamp assembly.

### DETAILED DESCRIPTION

Example embodiments will now be described more fully with reference to the accompanying drawings.

Turning to the figures, a robotic assembly is illustrated and designated with the reference numeral 10. The robotic assembly 10 includes a robot structure 12 with a base 14. The base 14 includes an adapter plate 16. The adapter plate 16 is secured with a base plate 18 via a clamping device 20.

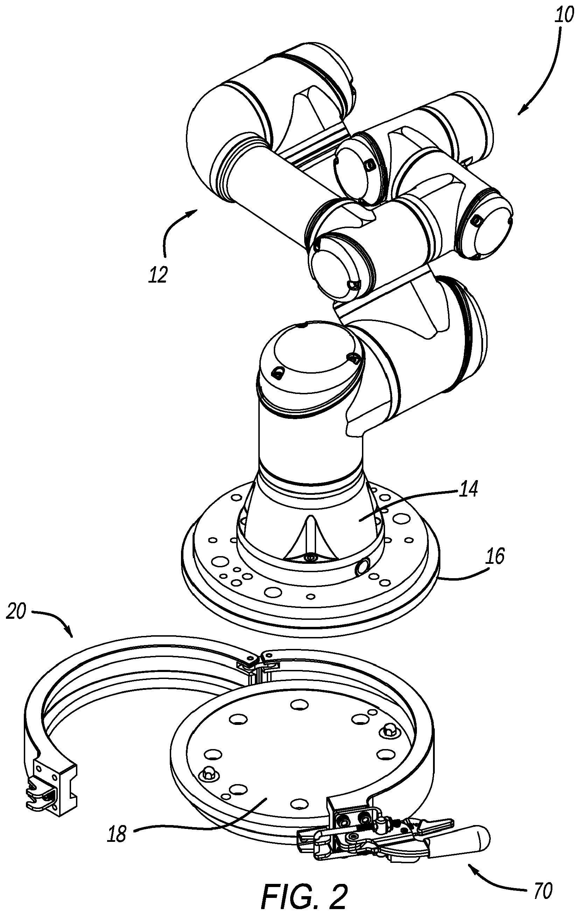

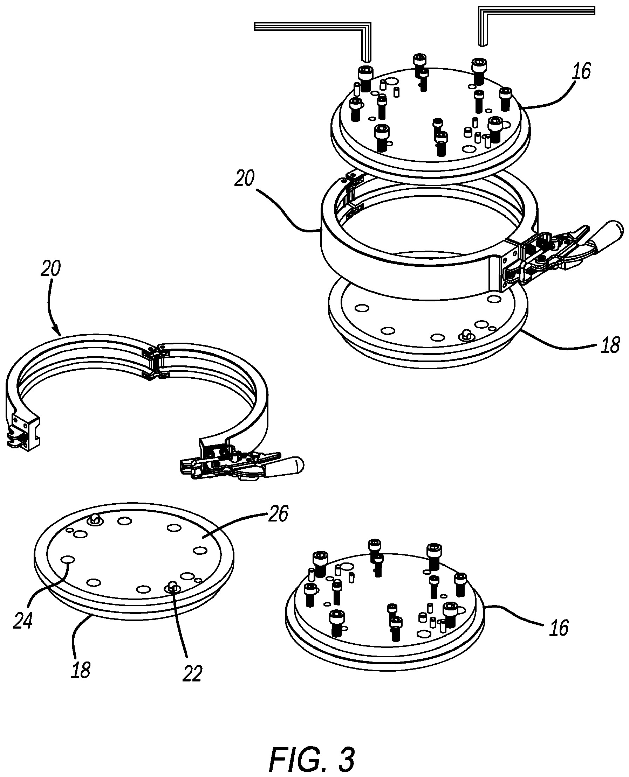

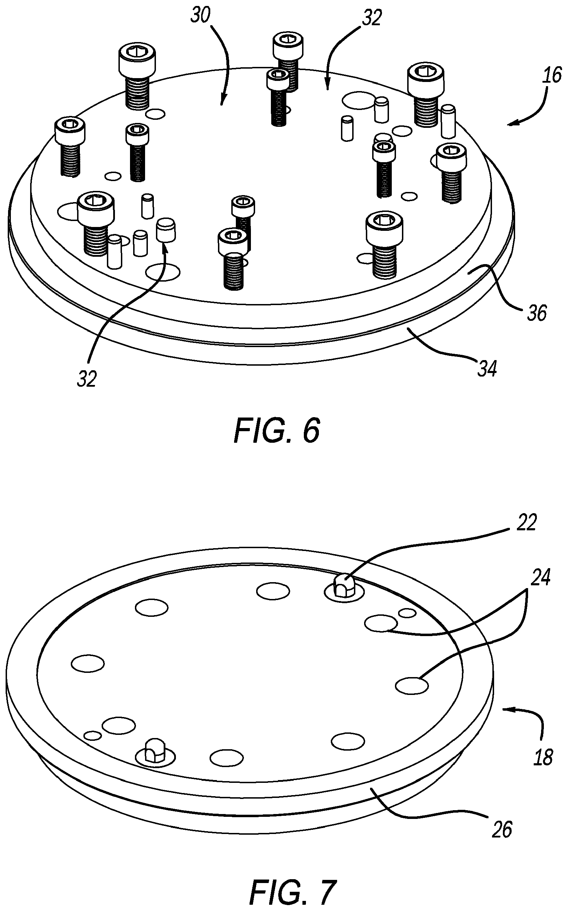

Turning to Figs. 2, 3 and 7, the base plate 18 is illustrated with an overall circular or disk configuration. The base plate 18 includes a plurality of pins 22 to receive the adapter plate 16. Also, the base plate 18 includes a plurality of apertures 24 that receive fasteners to secure the base plate 18 with a workplace. The base plate 18 includes a peripheral flange 26. The flange 26, or edge rim, includes a beveled surface 28. The beveled surface 28 assist in the clamping securement.

The adapter plate 16 has an overall circular disk configuration. However, both plates 16, 18 can have any desired configuration that mates with one another. The adapter plate 16 includes a mounting surface 30. The mounting surface 30 includes a plurality of patterns 32 to receive different robots 12. Patterns 32 have pins or sockets to receive the various robots 12 that can be mounted onto the surface 30.

The adapter plate 16 includes a peripheral flange or edge rim 34. The edge rim 34 includes a beveled surface 36 to enhance clamping. Also, the adapter plate 16 includes a bottom surface 38. The bottom surface 38 includes a plurality of sets of sockets 40 with each socket set 40 designed to engage the pins 22 of the plate base 18 to precisely affix the base and the robot. Thus, the sockets 40 align with the pins 22 for various alignment configurations.

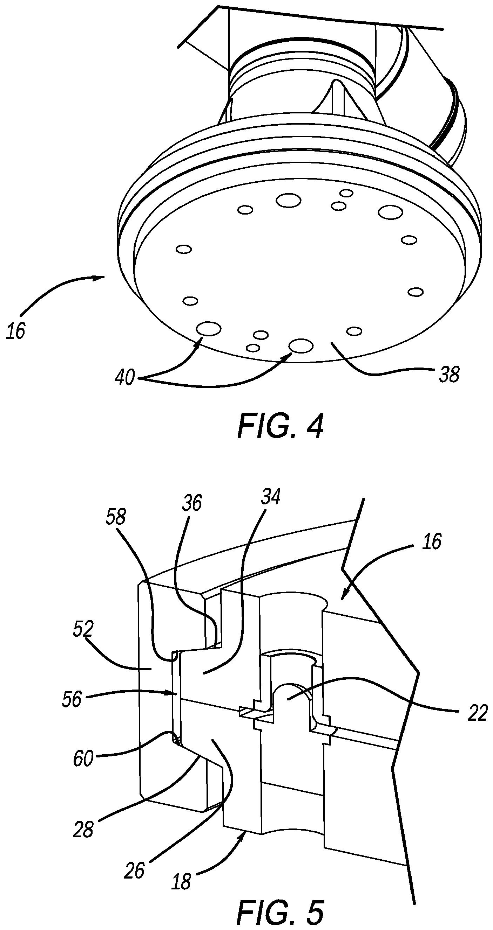

The clamping device 20 includes a split collar 50. The split collar 50 includes two halves 52 that are secured to one another via a pivot 54. The halves 52 include a groove 56 to receive the base plate rim 28 and adapter plate rim 34. As can be seen in Fig. 5, the groove 56 includes beveled edge wall surface 58, 60. The bevel wall surfaces 58, 60 contact the rim beveled surface 28, 34 to enable securement of the collar 50 with the base plate 18 and adapter plate 16. The split collar 50 includes a toggle clamp 70 to secure the collar halves 52 together. The toggle clamp 70 includes a latching hook 72 and a handle mechanism 74 with a loop 76 that couples with the hook 72 to tighten the halves 52 together.

In operation, the split collar 50 is placed around the base plate 18 and adapter plate 16 with the robot 12 on the adapter plate 16. The toggle clamp 70 latches the two halves 52 together. The bevel wall surfaces 58, 60 squeezes the bevel surfaces 28, 36 of the plates 16, 18 together when the toggle clamp 70 is locked in position. The squeezing provides for an extreme preload between the base plate 18 and adapter plate 16. This generates a significant rigidity for the couple and lock system. Clasping by the collar 50 at the plates periphery provides for the maximum resistance to moment loading and deflection of the robot assembly 10. Thus, the device with the customized plate mounting can be used as a manual tool changer as well as a coupling device. Thus, the robot and tool can be moved from base plate to base plate at various working positions along the assembly line.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A quick change robot system comprising:
a base plate for permanently mounting to a work station, an alignment mechanism is included with the base plate;
an adapter plate is coupled to a robot, the adapter plate affixes to the robot base, the adapter plate including a plurality of alignment mechanisms;
a clamping device for securing the base plate with the adapter plate, the clamping device is positioned about the base plate and adapter plate for clamping and preloading the base plate and adapter plate with one another.

2. The quick change robot system of Claim 1, further comprising a plurality of base plates.

3. The quick change robot system of Claim 1, wherein the clamping device includes a toggle clamp for tightening the clamping device.

4. The quick change robot system of Claim 1, wherein the base plate and adapter plate each include a beveled edge rim.

5. The quick change robot system of Claim 1, wherein the base plate alignment mechanism includes a plurality of pins.

6. The quick change robot system of Claim 1, wherein the adapter plate plurality of alignment mechanisms each include a plurality of sockets.

7. The quick change robot system of Claim 1, wherein the adapter plate further comprises a plurality of mounting patterns for receiving a plurality of different robots.

8. A quick change robot system comprising:
a base plate for permanently mounting to a work station, an alignment mechanism on the base plate;
an adapter plate for coupling with a robot, the adapter plate affixes to the robot base, the adapter plate includes a plurality of mounting patterns for receiving a plurality of different robots;
a clamping device for securing the base plate with the adapter plate, the clamping device is positioned about the base plate and adapter plate for clamping and preloading the base plate and adapter plate with one another.

9. The quick change robot system of Claim 8, further comprising a plurality of base plates.

10. The quick change robot system of Claim 8, wherein the base plate and adapter plate each include a beveled edge rim.

11. The quick change robot system of Claim 8, wherein the base plate alignment mechanism includes a plurality of pins.

12. The quick change robot system of Claim 8, wherein the adapter plate further comprises a plurality of alignment mechanisms.

13. The quick change robot system of Claim 12, wherein the adapter plate plurality of alignment mechanisms each include a plurality of sockets.
